(19) Europäisches Patentamt / European Patent Office / Office européen des brevets

(11) **EP 2 329 580 B1**

(12) # EUROPÄISCHE PATENTSCHRIFT

(45) Veröffentlichungstag und Bekanntmachung des Hinweises auf die Patenterteilung:
**30.05.2018 Patentblatt 2018/22**

(21) Anmeldenummer: **09783477.4**

(22) Anmeldetag: **28.09.2009**

(51) Int Cl.:
***H02H 7/045*** $^{(2006.01)}$ ***H02H 3/44*** $^{(2006.01)}$

(86) Internationale Anmeldenummer:
**PCT/EP2009/062518**

(87) Internationale Veröffentlichungsnummer:
**WO 2010/037711 (08.04.2010 Gazette 2010/14)**

(54) **VERFAHREN UND SCHUTZGERÄT ZUM ERZEUGEN EINES FEHLERSIGNALS, DAS EINEN WINDUNGSFEHLER IN EINEM TRANSFORMATOR ANZEIGT**

METHOD AND PROTECTIVE DEVICE FOR PRODUCING AN ERROR SIGNAL INDICATING A WINDING ERROR IN A TRANSFORMER

PROCÈDE ET APPAREIL DE PROTECTION SERVANT À GÉNÉRER UN SIGNAL D' ERREUR QUI INDIQUE LA DÉFAILLANCE D' UN ENROULEMENT DANS UN TRANSFORMATEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.10.2008 PL 38620808**

(43) Veröffentlichungstag der Anmeldung:
**08.06.2011 Patentblatt 2011/23**

(73) Patentinhaber: **Siemens Aktiengesellschaft**
**80333 München (DE)**

(72) Erfinder:
- **REBIZANT, Waldemar**
**PL-53/678 Wroclaw (PL)**
- **SCHIEL, Ludwig**
**10627 Berlin (DE)**
- **WISZNIEWSKI, Andrzej**
**PL-51-144 Wroclaw (PL)**

(56) Entgegenhaltungen:
**US-A- 4 772 978**
**US-A- 5 790 357**
**US-A1- 2003 036 821**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 329 580 B1

## Beschreibung

Die Erfindung betrifft ein Verfahren und ein Schutzgerät zum Erzeugen eines Fehlersignals, das einen Windungsfehler, insbesondere Windungsschluss, in einem Transformator anzeigt, wobei bei dem Verfahren mit zumindest einem Strommesswert und zumindest einem Spannungsmesswert ein Auslösemesswert gebildet wird, der Auslösemesswert mit einem vorgegebenen Auslösegrenzwert verglichen wird und das Fehlersignal erzeugt wird, wenn der Auslösemesswert den vorgegebenen Auslösegrenzwert erreicht oder überschreitet.
Ein solches Verfahren ist z. B. aus der US-Patentanmeldung US 2003/0036821 A1 bekannt.

Aus der internationalen Patentanmeldung WO 2005/064759 A1 ist ferner ein Verfahren zum Erkennen eines Windungsschlusses in einem Transformator bekannt; dieses Verfahren basiert auf der Bestimmung des Gegensystemstromes auf der Ober- und Unterspannungsseite des Transformators sowie auf einem Richtungsvergleich.

Die Erkennung von Windungsfehlern, wie z.B. Windungsschlüssen, in Transformatoren erfordert einen empfindlichen Schutzmechanismus. Solche Windungsschlüsse sind im Allgemeinen schwierig zu erkennen, da sie nur einen sehr kleinen Anstieg des Stromes an den Klemmen des Transformators verursachen. Der Strom an der Fehlerstelle ist wegen kurzgeschlossener Windungen hingegen sehr hoch und sehr gefährlich für die Transformatoren. Die heutzutage üblicherweise eingesetzten Schutzeinrichtungen erfassen die Leiterströme an beiden Seiten des Transformators und detektieren einen inneren Fehler durch den im Falle eines Windungsschlusses auftretenden Differenzstrom, wodurch im Allgemeinen jedoch keine ausreichende Empfindlichkeit erzielt wird, um Windungsschlüsse frühzeitig zu erkennen.

Windungsschlüsse können beispielsweise beim Einschalten der Transformatoren auftreten, da die auftretenden hohen Einschaltströme in den Wicklungen starke Vibrationen und damit starke mechanische Belastungen erzeugen, die zu den Windungsschlüssen führen können. Heutige Differentialschutzeinrichtungen bzw. Differentialschutzrelais werden durch die Einschaltstromstabilisierung, basierend auf der Analyse der 2. Harmonischen im Differenzstrom, während der Einschaltphase meistens blockiert, so dass sie die auftretenden Windungsschlüsse in der Einschaltphase gar nicht erkennen können.

Der Erfindung liegt demgemäß die Aufgabe zugrunde, ein Verfahren der eingangs genannten Art anzugeben, mit dem sich Windungsschlüsse sehr empfindlich und insbesondere auch während des Einschaltens des Transformators erfassen lassen.

Diese Aufgabe wird erfindungsgemäß durch ein Verfahren mit den Merkmalen gemäß Patentanspruch 1 gelöst. Vorteilhafte Ausgestaltungen des Verfahrens sind in Unteransprüchen angegeben.

Danach ist erfindungsgemäß vorgesehen, dass der Auslösemesswert unter Heranziehung des Nullstromes und der Nullspannung sowie der zeitlichen Ableitung des Nullstromes gebildet wird und der Auslösemesswert durch Addition zumindest dreier Spannungshilfswerte ermittelt wird, von denen ein erster Spannungshilfswert durch Multiplikation der zeitlichen Ableitung des Nullstromes mit einem ersten Hilfsfaktor gebildet wird, ein zweiter Spannungshilfswert durch Multiplikation des Nullstromes mit einem zweiten Hilfsfaktor gebildet wird und ein dritter Spannungshilfswert durch Multiplikation der Nullspannung mit einem dritten Hilfsfaktor gebildet wird.

Ein wesentlicher Vorteil des erfindungsgemäßen Verfahrens ist in seiner besonders großen Empfindlichkeit zu sehen, so dass Windungsschlüsse sehr schnell erkannt werden können.

Ein weiterer wesentlicher Vorteil des erfindungsgemäßen Verfahrens ist in seiner besonders großen Empfindlichkeit zu sehen, so dass dieses auch während des Einschaltens des Transformators sehr zuverlässig arbeitet.

Beispielsweise wird der Nullstrom mit einem Stromwandler im Erdpfad am Transformatorsternpunkt gemessen oder mit den Leiterströmen des Transformators berechnet.

Die Nullspannung kann beispielsweise an dem Transformatorsternpunkt gemessen oder mit den Leiterspannungen des Transformators berechnet werden.

Vorzugsweise werden die Leiterströme, die Leiterspannungen, der Nullstrom und/oder die Nullspannung an der in Stern geschalteten Transformatorseite des Transformators gemessen.

Vorzugsweise wird der Auslösemesswert gebildet gemäß:

$$\mathrm{Umess} = 3{*}L_{12}{*}i_0' + 3{*}R_{12}{*}i_0 + (-3){*}u_0,$$

wobei

Umess den Auslösemesswert, $L_{12}$ einen vorgegebenen Induktivitätswert, $i_0'$ die zeitliche Ableitung des Nullstroms, $R_{12}$ einen vorgegebenen Widerstandswert, $i_0$ den Nullstrom und $u_0$ die Nullspannung bezeichnet.

Im Falle eines Stern-Dreieck-Transformators - bzw. eines stern-dreieck-geschalteten Transformators - lässt sich eine noch bessere Empfindlichkeit erreichen, wenn der Auslösemesswert unter Heranziehung des Nullstromes, der Nullspannung, der zeitlichen Ableitung des Nullstromes, einer aus dem Strom in der Dreieckwicklung abgeleiteten Dreiecksstromgröße und der zeitlichen Ableitung der Dreiecksstromgröße gebildet wird. Der Strom in der Dreieckswicklung wird vorzugsweise mit einem zusätzlichen Stromwandler gemessen, der in der Dreieckswicklung angeordnet ist.

Im Falle eines Stern-Dreieck-Transformators wird es darüber hinaus als vorteilhaft angesehen, wenn der Auslösemesswert durch Addition von zumindest fünf Spannungshilfswerten ermittelt wird, von denen ein erster Spannungshilfswert durch Multiplikation der zeitlichen Ableitung des Nullstromes mit einem ersten Hilfsfaktor gebildet wird, ein zweiter Spannungshilfswert durch Multiplikation des Nullstromes mit einem zweiten Hilfsfaktor gebildet wird, ein dritter Spannungshilfswert durch Multiplikation der Nullspannung mit einem dritten Hilfsfaktor gebildet wird, ein vierter Spannungshilfswert durch Multiplikation der zeitlichen Ableitung der Dreiecksstromgröße mit einem vierten Hilfsfaktor gebildet wird und ein fünfter Spannungshilfswert durch Multiplikation der Dreiecksstromgröße mit einem fünften Hilfsfaktor gebildet wird.

Vorzugsweise wird der Auslösemesswert gebildet gemäß:

$$Umess = 3*L_{12}*i_0' + 3*R_{12}*i_0 + (-3)*u_0 + (L3/N)*i_d' + (R_3/N)*i_d,$$

wobei Umess den Auslösemesswert, $L_{12}$ einen vorgegebenen Induktivitätswert, $i_0'$ die zeitliche Ableitung des Nullstroms, $R_{12}$ einen vorgegebenen Widerstandswert, $i_0$ den Nullstrom, $u_0$ die

Nullspannung, $i_d'$ die zeitliche Ableitung der Dreiecksstromgröße, $i_d$ die Dreiecksstromgröße, R3 einen sich auf die interne Dreieckswicklung beziehenden Widerstandswert und L3 einen sich auf die interne Dreieckswicklung beziehenden Induktivitätswert bezeichnet.

Um Fehlauslösungen zu vermeiden, wird das Fehlersignal vorzugsweise erst erzeugt, wenn der Auslösemesswert den vorgegebenen Auslösegrenzwert über mindestens eine ganze Netzfrequenzperiode erreicht oder überschreitet.

Die Erfindung bezieht sich außerdem auf ein Schutzgerät bzw. Schutzrelais zum Schützen eines Transformators mit einer Steuereinrichtung, die im Falle eines im Transformator auftretenden Windungsfehlers, insbesondere Windungsschlusses, ein Fehlersignal erzeugt. Erfindungsgemäß ist die Steuereinrichtung derart ausgestaltet, dass sie ein Verfahren, wie es oben beschrieben ist, ausführen kann. Vorzugsweise weist die Steuereinrichtung eine Datenverarbeitungsanlage auf, die entsprechend programmiert ist.

Die Erfindung wird nachfolgend anhand von Ausführungsbeispielen näher erläutert; in diesem Zusammenhang zeigen beispielhaft:

Figur 1 zwei Messgrößenschaltungen für den Windungsschlussschutz;

Figur 2 ein vereinfachtes Schaltbild eines SternDreieck-Transformators mit einem Windungsschluss;

Figur 3 eine Transformatorersatzschaltung für den Transformator gemäß Figur 2 ohne Stromwandler in der Dreieckwicklung;

Figur 4 eine Transformatorersatzschaltung für den Transformator gemäß Figur 2 mit Stromwandler in der Dreieckwicklung;

Figur 5 ein Blockschaltbild für einen Berechnungsablauf, bei dem Phasenspannungen und -ströme verarbeitet und ausgewertet werden;

Figur 6 ein Blockschaltbild für einen Berechnungsablauf, bei dem Nullsystemgrößen verarbeitet und ausgewertet werden;

Figur 7 beispielhaft den Verlauf von 3*I0 während der Transformatoreinschaltung für verschiedene Werte der Transformatorimpedanz L3;

Figur 8 ein Blockschaltbild für einen Berechnungsablauf, bei dem Nullsystemgrößen sowie der Strom innerhalb der Dreieckwicklung verarbeitet und ausgewertet werden;

Figur 9 den Verlauf von Auslösemesswerten, die nach verschiedenen Verfahren berechnet worden sind, im Falle eines inneren Fehlers; und

Figur 10 den Verlauf von Auslösemesswerten, die nach verschiedenen Verfahren berechnet worden sind, im Falle einer Transformatoreinschaltung.

In den Figuren werden für vergleichbare oder identische Komponenten stets dieselben Bezugszeichen verwendet.

Die nachfolgend beispielhaft beschriebenen Verfahren basieren auf den Differentialgleichungen der Transformatorersatzschaltung. Um diese zu bestimmen, werden vorzugsweise die Ströme und Spannungen der in Stern geschalteten Transformatorseite gemessen. Zusätzlich kann der Strom in der Dreieckswicklung des Transformators gemessen werden.

Die Anschaltung der entsprechenden Messgrößen zeigt beispielhaft Figur 1, und zwar auf der linken Seite mit und auf der rechten Seite ohne zusätzlichen Stromwandler zum Messen des Stroms in der Dreieckswicklung.

Die Ersatzschaltung eines Transformators für die Analyse innerer Fehler (Phase-Erde-Fehler und Windung-zu-Windung-Fehler (so genannte Windungsschlüsse)) zeigt beispielhaft Figur 2. Windungsschlüsse (kurzgeschlossene Windungen) sind immer unsymmetrische Fehler, die auf eine Phase beschränkt sind. Dies ist in der Figur 2 mit der Windung, die durch den Pfeil mit dem Bezugszeichen P gekennzeichnet ist, und dem Fehlerstrom iz in nur einer Phase dargestellt. Der Strom in der Dreieckswicklung kann mit einem zusätzlichen Stromwandler erfasst werden; der Strom ist in der Figur 2 mit dem Bezugszeichen i1d bezeichnet.

Für das Transformatormodell nach Figur 2 gelten im Kurzschlussfall folgende Gleichungen für die Bestimmung des auftretenden Differenzstromes:

$$i_{op1} = i_1 - i_{1d} = i_1 - i_{CA} = i_{m1} + i_Z \qquad (3.1a)$$

$$i_{op2} = i_2 - (i_{1d} - i_A) = i_{m2} \qquad (3.1b)$$

$$i_{op3} = i_3 - (i_{1d} + i_C) = i_{m3} \qquad (3.1c)$$

mit

| | |
|---|---|
| $i_{1d}$ | gemessener Strom in der Dreieckwicklung, |
| $i_m$ | Magnetisierungsstrom in der betrachteten Phase, |
| $i_Z$ | interner Fehlerstrom, |
| $i_{A, B, C, 1, 2, 3}$ | gemessener Strom an den Klemmen des Transformators, |
| $i_{op}$ | Differenzstrom. |

In der Figur 2 ist ersichtlich, dass der innere bzw. interne Kurzschluss nur schwer erkennbar ist, vor allem wenn gleichzeitig ein Einschaltvorgang vorliegt. Auch wenn der Windungsschluss allein vorliegt, ist der gemessene Differenzstrom für die Erkennung durch einen Differentialschutz im Allgemeinen zu gering.

Die Figuren 3 und 4 zeigen die Ersatzschaltung des Stern-Dreieck-Transformators ohne und mit Erfassung des Stromes in der Dreieckwicklung. Alle Transformatorparameter sind dabei beispielhaft auf die Sternseite des Transformators bezogen. Damit kann der "ideale" Transformator zur Erläuterung herangezogen werden. Die Spannungsübersetzung kann durch den Bezug auf die Sternseite in den Gleichungen entfallen. Die Parameter $L_1$, $R_1$, $L_2$, $R_2$ sind mit der Hochspannungsseite des Transformators verbunden ($L_1$+$L_2$=$L_{12}$, $R_1$+$R_2$=$R_{12}$). Die Parameter $L_3$, $R_3$ repräsentieren die Mittel- oder Unterspannungsseite.

Die Parameter L1 und L2 bezeichnen die Ersatzinduktivität der in Stern geschalteten Oberspannungsseite; die Teilung "1" bzw. "2" berücksichtigt die Lage des Kurzschlusses in der Wicklung. Die Parameter L1 und L2 repräsentieren die Streuverluste. Durch die Tatsache, dass auch Luft oder das Vakuum das magnetische Feld leiten können, existiert dieses nicht nur im Kern, sondern auch in seiner Umgebung als Streufeld. Dieses Streufeld induziert in allen metallischen Teilen der Umgebung Induktionsspannungen, die ihrerseits Ströme mit den entsprechenden Verlusten verursachen, also die Streuverluste. Die Streuverluste werden als induktiver Blindwiderstand XS (L1, L2) aufgefasst. Die Streuverluste sind im Leerlaufversuch messbar. Gemessen wird der Leerlauf- oder Magnetisierungsstrom, vom Hersteller meist angegeben in % vom Nennstrom, woraus sich die gesamte Ersatzinduktivität L12, die sich aus den Teilinduktivitäten zusammensetzt (L12=L1+L2), errechnen lässt.

Die Parameter R1 und R2 bezeichnen den Ersatzwiderstand der Oberspannungsseite; die Teilung "1" bzw. "2" berücksichtigt die Lage des Kurzschlusses in der Wicklung. Die Parameter R1 und R2 repräsentieren die Kupfer - oder Wicklungsverluste. Die Wicklungsverluste entstehen infolge des Widerstands R12 des Wicklungsmaterials und sind reine Stromwärmeverluste. Die Wicklungsverluste sind im Kurzschlussversuch messbar. Gemessen wird die Kurzschlussspannung; von Transformatorherstellern werden die Wicklungsverluste und damit mittelbar der gesamte Ersatzwiderstand R12, der sich aus den Teilwiderständen R1 und R2 zusammensetzt (R12=R1+R2), im Allgemeinen in uk[%] angegeben.

Der Parameter L3 bezeichnet die Streuinduktivität zwischen der internen Delta-Wicklung und dem Kern des Transformators. Der Parameter L3 ist im Allgemeinen sehr klein; Entsprechendes gilt für den Widerstand R3, der sich auf die ohmschen Verluste in der internen Delta-Wicklung des Transformators bezieht.

Mit den Ersatzschaltungen in den Figuren 3 und 4 können beispielsweise die folgenden Schutzkriterien für die Erkennung von Windungsschlüssen abgeleitet werden:

- Schutzkriterium mit Phasenspannungen und Phasenströmen,
- Schutzkriterium mit Nullsystemspannung und Nullsystemstrom,
- Schutzkriterium mit Phasenspannung, Phasenstrom und Strom in der Deltawicklung,
- Schutzkriterium mit der Nullsystemspannung und Nullsystemstrom und Strom in der Deltawicklung.

Im Zusammenhang mit der Figur 5 wird nachfolgend ein Ausführungsbeispiel erläutert, das die Phasenspannungen und die Phasenströme ohne Erfassung des Stromes in der Deltawicklung nutzt. Die Figur 5 zeigt dabei ein Blockschaltbild, das den Berechnungsablauf verdeutlicht. In Block 10 erfolgt die Berechnung der Auslösebedingung nach Gleichung 3.5b (siehe unten) mit den Phasenspannungen und den Phasenströmen. In Block 20 wird das Ergebnis gefiltert und in Block 30 wird über die Auslösung entschieden und ggf. ein Fehlersignal F erzeugt.

Die Blöcke 10, 20 und 30 können beispielsweise ein Schutzgerät 40 bzw. Schutzrelais zum Schützen des Transformators bilden; das Schutzgerät 40 bzw. Schutzrelais erzeugt im Falle eines im Transformator auftretenden Windungsfehlers, insbesondere Windungsschlusses, das Fehlersignal F.

Aus der Ersatzschaltung in Figur 3 folgt:

$$i_1 - i_Z - i_{m1} = i_{AC} \qquad (3.2a)$$

$$i_2 - i_{m2} = i_{BA} \qquad (3.2b)$$

$$i_3 - i_{m3} = i_{CB} \qquad (3.2c)$$

Schreibt man die Maschengleichungen der Spannungen der einzelnen Phasen erhält man:

$$u_1 = L_1 i_1^{'} + R_1 i_1 + L_2 (i_1^{'} - i_Z^{'}) + R_2 (i_1 - i_Z) + L_3 i_{AC}^{'} + R_3 i_{AC} + u_A \qquad (3.3a)$$

$$u_2 = L_{12} i_2^{'} + R_{12} i_2 + L_3 i_{BA}^{'} + R_3 i_{BA} + u_B \qquad (3.3b)$$

$$u_3 = L_{12} i_3^{'} + R_{12} i_3 + L_3 i_{CB}^{'} + R_3 i_{CB} + u_C \qquad (3.3c)$$

Subtrahiert man Gleichung 3.3a von 3.3b ergibt sich:

$$u_2 - u_1 = L_{12}(i_2^{'} - i_1^{'}) + R_{12}(i_2 - i_1) + L_3(i_{BA}^{'} - i_{AC}^{'}) + R_3(i_{BA} - i_{AC}) + L_2 i_Z^{'} + R_2 i_Z + (u_B - u_A) \qquad (3.4a)$$

Bei Nutzung der Phasenströme von der Mittelspannungsseite erhält man mit

$$i_{BA} - i_{AC} = i_A / N$$

(N: Transformatorspannungsübersetzung):

$$u_2 - u_1 = L_{12}(i_2' - i_1') + R_{12}(i_2 - i_1) + \frac{1}{N}L_3 i_A' + \frac{1}{N}R_3 i_A + L_2 i_Z' + R_2 i_Z + (u_B - u_A)$$

(3.4b)

Diese Gleichung ist auch für die Phasen 1 und 3 und die Phasen 2 und 3 möglich. Damit können innere Kurzschlüsse in den anderen Phasen erkannt werden. Es ergeben sich weitere Gleichungen:

$$L_2 i_Z' + R_2 i_Z = (u_2 - u_1) - (u_B - u_A) - L_{12}(i_2' - i_1') - R_{12}(i_2 - i_1) - \frac{1}{N}L_3 i_A' - \frac{1}{N}R_3 i_A$$

(3.5a)

Unter Berücksichtigung der Beziehung:

$$u_B - u_A = N(u_{BA} - u_{AC}) = N(u_{Bf} - 2u_{Af} + u_{Cf}) = -3N\,u_{Af}\ :$$

erhält man

$$L_2 i_Z' + R_2 i_Z = (u_2 - u_1) + N\,u_{Af} - L_{12}(i_2' - i_1') - R_{12}(i_2 - i_1) - \frac{1}{N}L_3 i_A' - \frac{1}{N}R_3 i_A$$

bzw.

$$Umess = (u_2-u_1) + N*u_{Af} - L_{12}*(i_2'-i_1') - R_{12}*(i_2-i_1) - 1/N*L_3*I_A' - 1/N*R_3 i_A$$

(3.5b)

In der Gleichung 3.5b repräsentiert der Auslösemesswert Umess die Spannung, die proportional zum unbekannten Kurzschlussstrom ist. Sie berechnet sich auf Basis der Signale an den Klemmen des Transformators. Deshalb kann das Signal (Auslösemesswert Umess) aus Gleichung 3.5b als Maß (Kriterium) für den internen Windungsschluss genutzt werden.

Im Zusammenhang mit der Figur 6 wird nachfolgend ein Ausführungsbeispiel erläutert, das den Nullstrom und die Nullspannung berücksichtigt. Die Figur 6 zeigt dabei ein Blockschaltbild, das den Berechnungsablauf verdeutlicht. In Block 100 erfolgt die Bildung der Nullspannungen und der Nullströme. In Block 120 wird die Berechnung der Auslösebedingung nach Gleichung 3.8 (siehe unten) mit den Nullspannungen, den Nullströmen und dem gemessenen Sternpunktstrom durchgeführt. In Block 130 wird das Ergebnis gefiltert und in Block 140 wird über die Auslösung entschieden.

Ein Gleichungssystem basierend auf den Nullsystemgrößen kann unter der Randbedingung abgeleitet werden, dass die Deltawicklung intern, also im Inneren des Transformators, angeordnet ist und dass der Wicklungswiderstand sehr klein ist. Ist dies der Fall, kann nämlich angenommen werden, dass die Größen $L_3$ und $R_3$ fast Null sind und vernachlässigt werden können.

Die Gleichungen 3.3 können jetzt in folgender Form geschrieben werden:

$$u_1 = L_T i_1' + R_T i_1 - (L_2 + L_3) i_Z' - (R_2 + R_3) i_Z - L_3 i_{m1}' - R_3 i_{m1} + u_A \quad (3.6a)$$

$$u_2 = L_T i_2' + R_T i_2 - L_3 i_{m2}' - R_3 i_{m2} + u_B \quad (3.6b)$$

$$u_3 = L_T i_3' + R_T i_3 - L_3 i_{m3}' - R_3 i_{m3} + u_C \quad (3.6c)$$

Mit:

$$L_T = L_{12} + L_3,\ R_T = R_{12} + R_3,\ u_A + u_B + u_C = 0$$

Summiert man die Gleichungen 3.6a, 3.6b und 3.6c Seite für Seite, so erhält man:

$$3u_0 = 3L_T i_0^{'} + 3R_T i_0 - L_3(i_{m1}^{'} + i_{m2}^{'} + i_{m3}^{'}) - R_3(i_{m1} + i_{m2} + i_{m3}) - (L_2 + L_3)i_Z^{'} - (R_2 + R_3)i_Z \quad (3.7a)$$

Mit $L_3$=0 und $R_3$=0 ergibt sich:

$$3u_0 = 3L_{12} i_0^{'} + 3R_{12} i_0 - L_2 i_Z^{'} - R_2 i_Z \quad (3.7b)$$

Durch Umformen von Gleichung 3.7b ergibt sich:

$$L_2 i_Z^{'} + R_2 i_Z = 3L_{12} i_0^{'} + 3R_{12} i_0 - 3u_0 \quad \text{bzw.}$$

$$Umess = 3*L_{12}*i_0' + 3*R_{12}*i_0 + (-3)*u_0 \quad (3.8)$$

Die rechte Seite von Gleichung 3.8 repräsentiert den Auslösemesswert Umess, wobei die Nullsystemgrößen von der Sternseite aus gesehen werden. Der Nullsystemstrom kann entweder direkt gemessen werden mit einem Stromwandler im Erdpfad (Transformatorsternpunkt) oder mit den Leiterströmen berechnet werden. Die Nullsystemspannung $3u_0$ ist die Summe der Spannungen der Sternseite.

Als vorteilhaft wird es angesehen, wenn ein Stromwandler zur Messung von $3i_0$ (Sternpunktstromwandler) installiert ist. Dadurch wird die Berechnung nach Gleichung 3.8 durch Sättigung der Leiterstromwandler nicht beeinflusst.

Ist die Annahme, dass $L_3$=0 und $R_3$=0 gilt, nicht gültig, so ergibt sich:

$$L_2 i_Z^{'} + R_2 i_Z = 3L_T i_0^{'} + 3R_T i_0 - 3u_0 - L_3(i_{m1}^{'} + i_{m2}^{'} + i_{m3}^{'}) - R_3(i_{m1} + i_{m2} + i_{m3}) \quad (3.9)$$

Auch während der Einschaltung von Transformatoren kann es in jeder Periode der Netzfrequenz Zeitabschnitte geben, in denen gilt:

$$(i_{m1}^{'} + i_{m2}^{'} + i_{m3}^{'}) \cong 0 \text{ and } (i_{m1} + i_{m2} + i_{m3}) \cong 0 .$$

Deshalb wird der innere Kurzschluss besonders zuverlässig erkannt, wenn über eine ganze Netzperiode folgende Bedingung erfüllt ist.

$$|Umess| = |L_2 i_Z^{'} + R_2 i_Z|_{t-0.02 \to t} > H \quad (3.10)$$

Mit:

$H$ - definierter Schwellwert

Die Beeinflussung des Nullsystemstromes durch die Werte der Transformatorimpedanz während der Transformatoreinschaltung zeigt Figur 7.

Es ist zu sehen, dass nur für $L_3$ und $R_3$ nahe Null der Nullsystemstrom klein genug ist, um für einen inneren Kurzschluss zu entscheiden, wenn er vorhanden ist. Andererseits wird die Spannung, berechnet mit Gleichung 3.8, durch einen Einschaltvorgang beeinflusst und nur die Bedingung nach Gleichung 3.10 kann zur Erkennung innerer Kurzschluss verwendet werden.

In der Figur 8 ist ein Ausführungsbeispiel gezeigt, bei der die Berechung des Auslösekriteriums auf der Basis der Nullsystemgrößen und des zirkulierenden Stromes in der Dreieckswicklung erfolgt.

Die Figur 8 zeigt ein Blockschaltbild, das den Berechnungsablauf verdeutlicht. In Block 200 erfolgt die Bildung der Nullspannungen und der Nullströme. In Block 220 wird die Berechnung der Auslösebedingung nach Gleichung 3.14 (siehe unten) mit den Nullspannungen, den Nullströmen und dem gemessenen Strom in der Dreieckswicklung durchgeführt. Alternativ zur Berechnung des Nullstromes aus den drei Leiterströmen kann dieser am Transformatorsternpunkt gemessen werden. In Block 230 wird das Ergebnis gefiltert und in Block 240 wird über die Auslösung entschieden.

Das Auslösekriterium für die Auslösung bei der Anordnung gemäß der Figur 8 kann aus Gleichung 3.3. abgeleitet werden. Dieses stellt eine Variante des Kriteriums nach Gleichung 3.8 dar, welche zu einer noch besseren Kompensation des unbekannten Magnetisierungsstromes führt. Die Summation der linken und rechten Seite der Gleichungen 3.3a, 3.3b und 3.3c führt zu:

$$3u_0 = 3L_{12}i_0' + 3R_{12}i_0 + L_3(i_{AC}' + i_{BA}' + i_{CB}') + R_3(i_{AC} + i_{BA} + i_{CB}) + u_A + u_B + u_C - L_2 i_Z' - R_2 i_Z \quad (3.11)$$

Es gilt ferner:

$u_A$+$u_B$+$uC$ = 0 und
gemäß Figur 4

$$i_{AC} + i_{BA} + i_{CB} = i_{AC} + i_{AC} + \frac{1}{N}i_A + i_{AC} - \frac{1}{N}i_C = 3i_{AC} + \frac{1}{N}i_A - \frac{1}{N}i_C \quad (3.12)$$

Wenn nun der Strom in der Dreieckwicklung $i_{AC}$ direkt gemessen wird ( $i_{AC} = \frac{1}{N}i_{1d}$ ) , so erhält man nach Einführung einer weiteren Variablen

$$i_d = 3i_{1d} + i_A - i_C \quad (3.13)$$

und durch Umformen von Gleichung 3.11:

$$L_2 i_Z' + R_2 i_Z = 3L_{12}i_0' + 3R_{12}i_0 - 3u_0 + \frac{1}{N}L_3 i_d' + \frac{1}{N}R_3 i_d$$

bzw.

$$Umess = 3*L_{12}*i_0' + 3*R_{12}*i_0 + (-3)*u_0 + (L3/N)*i_d' + (R_3/N)*i_d, \quad (3.14)$$

Mit Gleichung 3.14 kann der Auslösemesswert Umess, der proportional zum internen Kurzschlussstrom ist, noch genauer berechnet werden, und zwar auch dann, wenn der innere Kurzschluss während einer Einschaltung des Transformators auftritt.

Dieser Vorteil des Algorithmus wird erreicht durch die zusätzliche Messung des zirkulierenden Stromes in der Dreieckwicklung. Die äquivalente Impedanz der Mittel- oder Unterspannungsseite ($L_3$, $R_3$) muss bekannt sein, da sonst Schätzfehler auftreten.

Die oben beschriebenen Verfahren wurden unter Berücksichtigung der Gleichungen 3.5b, 3.8 und 3.14 simuliert. Das Schutzsystem wurde dabei zunächst mit den primären Netzströmen und -spannungen getestet. Dies gestattet die Wirksamkeit zunächst ohne Einfluss des Stromwandlerverhaltens (z.B. Sättigung) darzustellen. Die Werte für $L_3$ und $R_3$ wurden als bekannt und nahe Null angenommen.

In der Figur 9 ist der Fall eines inneren Windungsschlusses zum Zeitpunkt t = 0,2 s dargestellt. Unter den genannten idealen Bedingungen ergeben alle drei Auslösekriterien die richtigen Ergebnisse. Die berechnete Spannung nach Fehlereintritt ist sinusförmig mit der Netzfrequenz und einer Amplitude von 8,8 kV, Dies entspricht ca. 5% der Transformatornennspannung. Das Signal ist groß genug und der Kurzschluss kann sicher erkannt werden.

Im Falle einer Transformatoreinschaltung (vgl. Figur 10) bleibt das Auslösekriterium nach Gleichung 3.14 wegen der zusätzlichen Information über den Strom in der Dreieckswicklung am stabilsten.

Bei dem Auslösekriterium nach Gleichung 3.8 ist die gemessene Spannung nicht Null. Ihre Form wird bestimmt durch die Form des Nullsystemstromes. Auch in diesem Fall kann jedoch eine richtige Schutzreaktion erreicht werden, wenn die zusätzliche Bedingung nach Gleichung 3.10 geprüft wird, die anschaulich beschrieben flache Gebiete im Spannungssignal detektiert.

Wird die Spannung nach Gleichung 3.5b unter Nutzung der Phasenspannung und -ströme bestimmt, ist eine Schutzentscheidung nicht immer einfach möglich. Die flachen Gebiete sind zwar auch vorhanden, die Kurvenform ist jedoch recht unbestimmt mit hohen Spitzen bis zu 50% der Transformatornennspannung. Diese Spitzen werden durch numerische Effekte (Subtraktion großer Werte der Phasenspannung) verursacht. Die gleichen Spitzen treten auch bei einer Transformatoreinschaltung mit einem inneren Fehler auf. Für einen sicheren Schutzentscheid sind zusätzliche Maßnahmen empfehlenswert.

Eine Verbesserung des Schutzverhaltens, insbesondere für das Kriterium nach Gleichung 3.5b, kann durch die Anwendung digitaler Filter erreicht werden. Sehr gute Ergebnisse werden beispielsweise mit einem Median-Filter erreicht. Durch das Filter werden die Signalspitzen vollständig beseitigt, und das Spektrum des Signals bleibt weitestgehend erhalten. Durch die zusätzliche Signalfilterung ist auch bei dem Kriterium nach Gleichung 3.5b ein sicherer Schutzentscheid möglich.

Das Median-Filter ist eine nicht-lineare digitale Filtertechnik, die beispielsweise verwendet wird, um Rauschen aus Signalen zu entfernen. Die Idee besteht darin, den Abtastwert des Eingangs zu prüfen und zu entscheiden, ob er für das Signal typisch ist. Dies wird mit Hilfe eines Fensters ausgeführt, das aus einer ungeraden Zahl von Proben besteht. Die Werte im Fenster sind in numerischer Reihenfolge sortiert. Der mittlere Wert, der Abtastwert im Zentrum des Fensters, wird als Ausgangswert gewählt. Der jeweils älteste Abtastwert wird verworfen, ein neuer Abtastwert hinzugenommen, und die Berechnung wiederholt. Diese Art der Filterung ist robuster als eine Durchschnittswertberechnung, und ein sehr hoher Wert (Spitze) in Nachbarschaft kleinerer Werte beeinflusst wenig den Mittelwert.

Zusammengefasst werden durch die oben beispielhaft beschriebene Vorgehensweise folgende Vorteile erreicht:

- Separater Schutz für Transformatoren parallel zum Differentialschutz mit physikalisch anderem Wirkprinzip
- Der Schutz wird nicht (wie beim Differentialschutz üblich) bei Einschaltvorgängen blockiert. Damit erfolgt auch keine Blockierung durch eine 2. Harmonische bei Wandlersättigung.
- Empfindliches Schutzkriterium für die Erkennung kleiner Kurzschlüsse im Transformator (Kurzschlüsse zwischen wenigen Windungen einer Wicklung werden erkannt.)
- Wird der Nullsystemstrom 3I0 direkt gemessen (Strom im Sternpunkt des Transformators) wirkt sich die mögliche Sättigung der Leiterstromwandler relativ wenig auf den sicheren Schutzentscheid aus.

Bezugszeichen

| | |
|---|---|
| $i_{1d}$ | gemessener Strom in der Dreieckwicklung |
| $i_{m1, m2, m3}$ | Magnetisierungsstrom in der betrachteten Phase |
| $i_Z$ | interner Kurzschlussstrom |
| $i_{A, B, C, 1, 2, 3}$ | gemessener Strom an den Klemmen des Transformators (A, B, C Dreieckseite, 1, 2, 3 Sternseite) |
| $u_{A, B, C, 1, 2, 3}$ | gemessene Spannung an den Klemmen des Transformators (A, B, C Dreieckseite, 1, 2, 3 Sternseite) |
| $i_{op}$ | Differenzstrom (operational) |
| $L_{1, 2, 3}$ | Induktivität (Index 1, 2 - Oberspannungsseite, 3 - Unterspannungsseite) |
| $R_{1, 2, 3}$ | Widerstand (Index 1, 2 - Oberspannungsseite, 3 - Unterspannungsseite) |
| $u_o$ | Nullsystemspannung |
| $i_o$ | Nullsystemstrom am Sternpunkt |
| $H$ | Schwellwert |
| $N$ | Transformatorspannungsverhältnis |
| $T$ | Abtastperiode |
| 10,20,30 | Blöcke |
| 40 | Schutzgerät |
| 100 | Block |
| 120, 130 | Blöcke |
| 140 | Block |
| 200 | Block |
| 220, 230 | Blöcke |

240 Block

## Patentansprüche

1. Verfahren zum Erzeugen eines Fehlersignals, das einen Windungsfehler, insbesondere Windungsschluss, in einem Transformator anzeigt, wobei bei dem Verfahren

   - mit zumindest einem Strommesswert und zumindest einem Spannungsmesswert ein Auslösemesswert gebildet wird,
   - der Auslösemesswert mit einem vorgegebenen Auslösegrenzwert verglichen wird und
   - das Fehlersignal erzeugt wird, wenn der Auslösemesswert den vorgegebenen Auslösegrenzwert erreicht oder überschreitet,

   **dadurch gekennzeichnet, dass**
   der Auslösemesswert unter Heranziehung des Nullstromes und der Nullspannung sowie der zeitlichen Ableitung des Nullstromes gebildet wird und der Auslösemesswert durch Addition zumindest dreier Spannungshilfswerte ermittelt wird, von denen

   - ein erster Spannungshilfswert durch Multiplikation der zeitlichen Ableitung des Nullstromes mit einem ersten Hilfsfaktor gebildet wird,
   - ein zweiter Spannungshilfswert durch Multiplikation des Nullstromes mit einem zweiten Hilfsfaktor gebildet wird und
   - ein dritter Spannungshilfswert durch Multiplikation der Nullspannung mit einem dritten Hilfsfaktor gebildet wird.

2. Verfahren nach Anspruch 1,
   **dadurch gekennzeichnet, dass**
   der Nullstrom mit einem Stromwandler im Erdpfad am Transformatorsternpunkt gemessen wird oder mit den Leiterströmen des Transformators berechnet wird.

3. Verfahren nach Anspruch 1 oder 2,
   **dadurch gekennzeichnet, dass**
   die Nullspannung an Transformatorsternpunkt gemessen wird oder mit den Leiterspannungen des Transformators berechnet wird.

4. Verfahren nach einem der vorangehenden Ansprüche 1-3, **dadurch gekennzeichnet, dass**
   die Leiterströme, die Leiterspannungen, der Nullstrom und/oder die Nullspannung an der in Stern geschalteten Transformatorseite des Transformators gemessen werden.

5. Verfahren nach einem der Ansprüche 1-4,
   **dadurch gekennzeichnet, dass**
   der Auslösemesswert gebildet wird gemäß:

$$Umess = 3*L_{12}*i_0' + 3*R_{12}*i_0 + (-3)*u_0,$$

   wobei
   Umess den Auslösemesswert, $L_{12}$ einen vorgegebenen Induktivitätswert, $i_0$' die zeitliche Ableitung des Nullstroms, $R_{12}$ einen vorgegebenen Widerstandswert, $i_0$ den Nullstrom und $u_0$ die Nullspannung bezeichnet.

6. Verfahren nach einem der vorangehenden Ansprüche 1-4, **dadurch gekennzeichnet, dass**
   der Auslösemesswert für einem Stern-Dreieck-Transformator gebildet wird, und zwar unter Heranziehung des Nullstromes, der Nullspannung, der zeitlichen Ableitung des Nullstromes, einer aus dem Strom in der Dreieckwicklung des Transformators abgeleiteten Dreiecksstromgröße und der zeitlichen Ableitung der Dreiecksstromgröße.

7. Verfahren nach Anspruch 6,
   **dadurch gekennzeichnet, dass**

der Strom in der Dreieckwicklung mit einem zusätzlichen Stromwandler in der Dreieckswicklung gemessen wird.

**8.** Verfahren nach Anspruch 6 oder 7,
**dadurch gekennzeichnet, dass**
der Auslösemesswert durch Addition von zumindest fünf Spannungshilfswerten ermittelt wird, von denen

- ein erster Spannungshilfswert durch Multiplikation der zeitlichen Ableitung des Nullstromes mit einem ersten Hilfsfaktor gebildet wird,
- ein zweiter Spannungshilfswert durch Multiplikation des Nullstromes mit einem zweiten Hilfsfaktor gebildet wird,
- ein dritter Spannungshilfswert durch Multiplikation der Nullspannung mit einem dritten Hilfsfaktor gebildet wird,
- ein vierter Spannungshilfswert durch Multiplikation der zeitlichen Ableitung der Dreiecksstromgröße mit einem vierten Hilfsfaktor gebildet wird und
- ein fünfter Spannungshilfswert durch Multiplikation der Dreiecksstromgröße mit einem fünften Hilfsfaktor gebildet wird.

**9.** Verfahren nach Anspruch 8,
**dadurch gekennzeichnet, dass**
der Auslösemesswert gebildet wird gemäß:

$$Umess = 3*L_{12}*i_0' + 3*R_{12}*i_0 + (-3)*u_0 + (L3/N)*i_d' + (R_3/N)*i_d,$$

wobei Umess den Auslösemesswert, $L_{12}$ einen vorgegebenen Induktivitätswert, $i_0$' die zeitliche Ableitung des Nullstroms, $R_{12}$ einen vorgegebenen Widerstandswert, $i_0$ den Nullstrom, $u_0$ die Nullspannung, $i_d$' die zeitliche Ableitung der Dreiecksstromgröße, $i_d$ die Dreiecksstromgröße, R3 einen sich auf die interne Dreieckswicklung beziehenden Widerstandswert und L3 einen sich auf die interne Dreieckswicklung beziehenden Induktivitätswert bezeichnet.

**10.** Verfahren nach einem der vorangehenden Ansprüche, **dadurch gekennzeichnet, dass**
das Fehlersignal erst erzeugt wird, wenn der Auslösemesswert den vorgegebenen Auslösegrenzwert über mindestens eine ganze Netzfrequenzperiode erreicht oder überschreitet.

**11.** Schutzgerät (40) zum Schützen eines Transformators mit einer Steuereinrichtung zum Erzeugen eines Fehlersignals im Falle eines im Transformator auftretenden Windungsfehler, insbesondere Windungsschlusses, wobei die Steuereinrichtung derart ausgestaltet ist, dass sie ein Verfahren nach einem der voranstehenden Ansprüche ausführen kann.

**12.** Schutzgerät nach Anspruch 11,
**dadurch gekennzeichnet, dass**
die Steuereinrichtung eine Datenverarbeitungsanlage aufweist, die derart programmiert ist, dass sie ein Verfahren nach einem der voranstehenden Ansprüche ausführen kann.

## Claims

**1.** Method for producing a fault signal indicating a winding fault, in particular a turn-to-turn fault, in a transformer, whereby in the method

- a tripping measurement value is formed with at least one current measurement value and at least one voltage measurement value,
- the tripping measurement value is compared with a predetermined tripping limit value, and
- the fault signal is produced if the tripping measurement value reaches or exceeds the predetermined tripping limit value,

**characterized in that**
the tripping measurement value is formed using the zero phase-sequence current and the zero phase-sequence voltage as well as the derivative with respect to time of the zero phase-sequence current and the tripping measurement value is determined by addition of at least three auxiliary voltage values, of which

- a first auxiliary voltage value is formed by multiplication of the derivative with respect to time of the zero phase-sequence current by a first auxiliary factor,
- a second auxiliary voltage value is formed by multiplication of the zero phase-sequence current by a second auxiliary factor, and
- a third auxiliary voltage value is formed by multiplication of the zero phase-sequence voltage by a third auxiliary factor.

**2.** Method according to Claim 1,
**characterized in that**
the zero phase-sequence current is measured using a current transformer in the ground path at the transformer neutral point or is calculated using the conductor currents of the transformer.

**3.** Method according to Claim 1 or 2,
**characterized in that**
the zero phase-sequence voltage is measured at the transformer neutral point or is calculated using the conductor voltages of the transformer.

**4.** Method according to one of the preceding Claims 1-3, **characterized in that**
the conductor currents, the conductor voltages, the zero phase-sequence current and/or the zero phase-sequence voltage are measured on the star-connected transformer side of the transformer.

**5.** Method according to one of Claims 1-4,
**characterized in that**
the tripping measurement value is formed in accordance with the following equation:

$$Umeas = 3*L_{12}*i_0' + 3*R_{12}*i_0 + (-3)*u_0,$$

where
Umeas denotes the tripping measurement value, $L_{12}$ denotes a predetermined inductance value, $i_0'$ denotes the derivative with respect to time of the zero phase-sequence current, $R_{12}$ denotes a predetermined resistance value, $i_0$ denotes the zero phase-sequence current and $u_0$ denotes the zero phase-sequence voltage.

**6.** Method according to one of the preceding Claims 1-4, **characterized in that** the tripping measurement value for a star-delta transformer is formed, to be precise using the zero phase-sequence current, the zero phase-sequence voltage, the derivative with respect to time of the zero phase-sequence current, a delta current variable derived from the current in the delta winding of the transformer and the derivative with respect to time of the delta current variable.

**7.** Method according to Claim 6,
**characterized in that**
the current in the delta winding is measured using an additional current transformer in the delta winding.

**8.** Method according to Claim 6 or 7,
**characterized in that**
the tripping measurement value is determined by addition of at least five auxiliary voltage values, of which

- a first auxiliary voltage value is formed by multiplication of the derivative with respect to time of the zero phase-sequence current by a first auxiliary factor,
- a second auxiliary voltage value is formed by multiplication of the zero phase-sequence current by a second auxiliary factor,
- a third auxiliary voltage value is formed by multiplication of the zero phase-sequence voltage by a third auxiliary factor,
- a fourth auxiliary voltage value is formed by multiplication of the derivative with respect to time of the delta current variable by a fourth auxiliary factor, and
- a fifth auxiliary voltage value is formed by multiplication of the delta current variable by a fifth auxiliary factor.

**9.** Method according to Claim 8,

**characterized in that**
the tripping measurement value is formed in accordance with the following equation:

$$Umeas = 3*L_{12}*i_0' + 3*R_{12}*i_0 + (-3)*u_0 + (L3/N)*i_d' + (R_3/N)*i_d$$

where Umeas denotes the tripping measurement value, $L_{12}$ denotes a predetermined inductance value, $i_0$' denotes the derivative with respect to time of the zero phase-sequence current, $R_{12}$ denotes a predetermined resistance value, $i_0$ denotes the zero phase-sequence current, $u_0$ denotes the zero phase-sequence voltage, $i_d$, denotes the derivative with respect to time of the delta current variable, $i_d$ denotes the delta current variable, R3 denotes a resistance value which relates to the internal delta winding, and L3 denotes an inductance value which relates to the internal delta winding.

**10.** Method according to one of the preceding claims, **characterized in that** the fault signal is produced only when the tripping measurement value reaches or exceeds the predetermined tripping limit value over at least a whole system frequency period.

**11.** Protective device (40) for protecting a transformer with a control device for producing a fault signal in the event of a winding fault, in particular a turn-to-turn fault, occurring in the transformer, wherein the control device is configured such that it can implement a method according to one of the preceding claims.

**12.** Protective device according to Claim 11,
**characterized in that**
the control device has a data processing unit which is programmed such that it can implement a method according to one of the preceding claims.

**Revendications**

**1.** Procédé de production d'un signal de défaut, qui indique un défaut dans une spire, notamment un court-circuit entre spires, d'un transformateur, procédé dans lequel

- on forme une valeur de mesure de déclenchement par au moins une valeur de mesure du courant et au moins une valeur de mesure de la tension,
- on compare la valeur de mesure de déclenchement à une valeur limite de déclenchement donnée à l'avance et
- on produit le signal de défaut, si la valeur de mesure de déclenchement atteint ou dépasse la valeur limite de déclenchement donnée à l'avance,

**caractérisé en ce que**
on forme la valeur de mesure de déclenchement en tirant parti du courant homopolaire et de la tension homopolaire ainsi que de la dérivée en fonction du temps du courant homopolaire et on détermine la valeur de mesure de déclenchement par addition d'au moins trois valeurs auxiliaires de tension, dont

- une première valeur auxiliaire de tension est formée par multiplication de la dérivée en fonction du temps du courant homopolaire par un premier facteur auxiliaire,
- une deuxième valeur auxiliaire de tension est formée par multiplication du courant homopolaire par un deuxième facteur auxiliaire et
- une troisième valeur auxiliaire de tension est formée par multiplication de la tension homopolaire par un troisième facteur auxiliaire.

**2.** Procédé suivant la revendication 1,
**caractérisé en ce que**
on mesure le courant homopolaire par un convertisseur de courant dans le trajet à la terre au point neutre du transformateur ou on le calcule par les courants entre phases du transformateur.

**3.** Procédé suivant la revendication 1 ou 2,
**caractérisé en ce que**

on mesure la tension homopolaire au point neutre du transformateur ou on la calcule par les tensions entre phases du transformateur.

**4.** Procédé suivant l'une des revendications précédentes 1 à 3,
**caractérisé en ce que**
l'on mesure les courants entre phases, les tensions entre phases, le courant homopolaire et/ou la tension homopolaire du côté du transformateur monté en étoile.

**5.** Procédé suivant l'une des revendications 1 à 4, **caractérisé en ce que**
l'on forme la valeur de mesure de déclenchement suivant :

$$Umess = 3*L_{12}*i_0' + 3*R_{12}*i_0 + (-3)*u_0,$$

dans laquelle
Umess désigne la valeur de mesure de déclenchement, $L_{12}$ une valeur d'inductance donnée à l'avance, $i_0$', la dérivée en fonction du temps du courant homopolaire, $R_{12}$ une valeur de résistance donnée à l'avance, $i_0$ le courant homopolaire et $U_0$ la tension homopolaire.

**6.** Procédé suivant l'une des revendications précédentes 1 à 4,
**caractérisé en ce que**
l'on forme la valeur de mesure de déclenchement pour un transformateur étoile-triangle, et cela en tirant parti du courant homopolaire, de la tension homopolaire, de la dérivée en fonction du temps du courant homopolaire d'une grandeur de courant en triangle déduite du courant dans l'enroulement en triangle du transformateur et de la dérivée en fonction du temps de la grandeur de courant en triangle.

**7.** Procédé suivant la revendication 6,
**caractérisé en ce que**
l'on mesure le courant dans l'enroulement en triangle par un convertisseur de courant supplémentaire dans l'enroulement en triangle.

**8.** Procédé suivant la revendication 6 ou 7,
**caractérisé en ce que**
on détermine la valeur de mesure de déclenchement par addition d'au moins cinq valeurs auxiliaires de tension,

- on forme une première valeur auxiliaire de tension par multiplication de la dérivée en fonction du temps du courant homopolaire par un premier facteur auxiliaire,
- on forme une deuxième valeur auxiliaire de tension par multiplication du courant homopolaire par un deuxième facteur auxiliaire,
- on forme une troisième valeur auxiliaire de tension par multiplication de la tension homopolaire par un troisième facteur auxiliaire,
- on forme une quatrième valeur auxiliaire de tension par multiplication de la dérivée en fonction du temps de la grandeur de courant en triangle par un quatrième facteur auxiliaire et
- on forme une cinquième valeur auxiliaire de tension par multiplication de la grandeur de courant en triangle par un cinquième facteur auxiliaire.

**9.** Procédé suivant la revendication 8,
**caractérisé en ce que**
l'on forme la valeur de mesure de déclenchement suivant :

$$Umess = 3*L_{12}*i_0' + 3*R_{12}*i_0 + (-3)*u_0 + (L3/N)*i_d' + (R_3/N)*i_d,$$

dans laquelle Umess désigne la valeur de mesure de déclenchement, $L_{12}$ une valeur d'inductance donnée à l'avance, $i_0$' la dérivée en fonction du temps du courant homopolaire, $R_{12}$ une valeur de résistance donnée à l'avance, $i_0$ le courant homopolaire, $u_0$ la tension homopolaire, $i_d$' la dérivée en fonction du temps de la grandeur de courant en triangle, $i_d$ la grandeur de courant en triangle, $R_3$ une valeur de résistance se rapportant à l'enroulement en triangle interne et L3 une valeur d'inductance se rapportant à l'enroulement en triangle interne.

**10.** Procédé suivant l'une des revendications précédentes, **caractérisé en ce que** l'on ne produit le signal de défaut que si la valeur de mesure de déclenchement atteint ou dépasse la valeur limite de déclenchement donnée à l'avance, pendant au moins toute une période de fréquence du réseau.

**11.** Appareil (40) de protection, pour protéger un transformateur, comprenant un dispositif de commande pour produire un signal de défaut, dans le cas d'un défaut de spire se produisant dans le transformateur, notamment d'un court-circuit entre spires, le dispositif de commande étant conformé de manière à pouvoir exécuter un procédé suivant l'une des revendications précédentes.

**12.** Appareil de protection suivant la revendication 11, **caractérisé en ce que** le dispositif de commande a un système de traitement de données, programmé de manière à pouvoir exécuter un procédé suivant l'une des revendications précédentes.

FIG 1

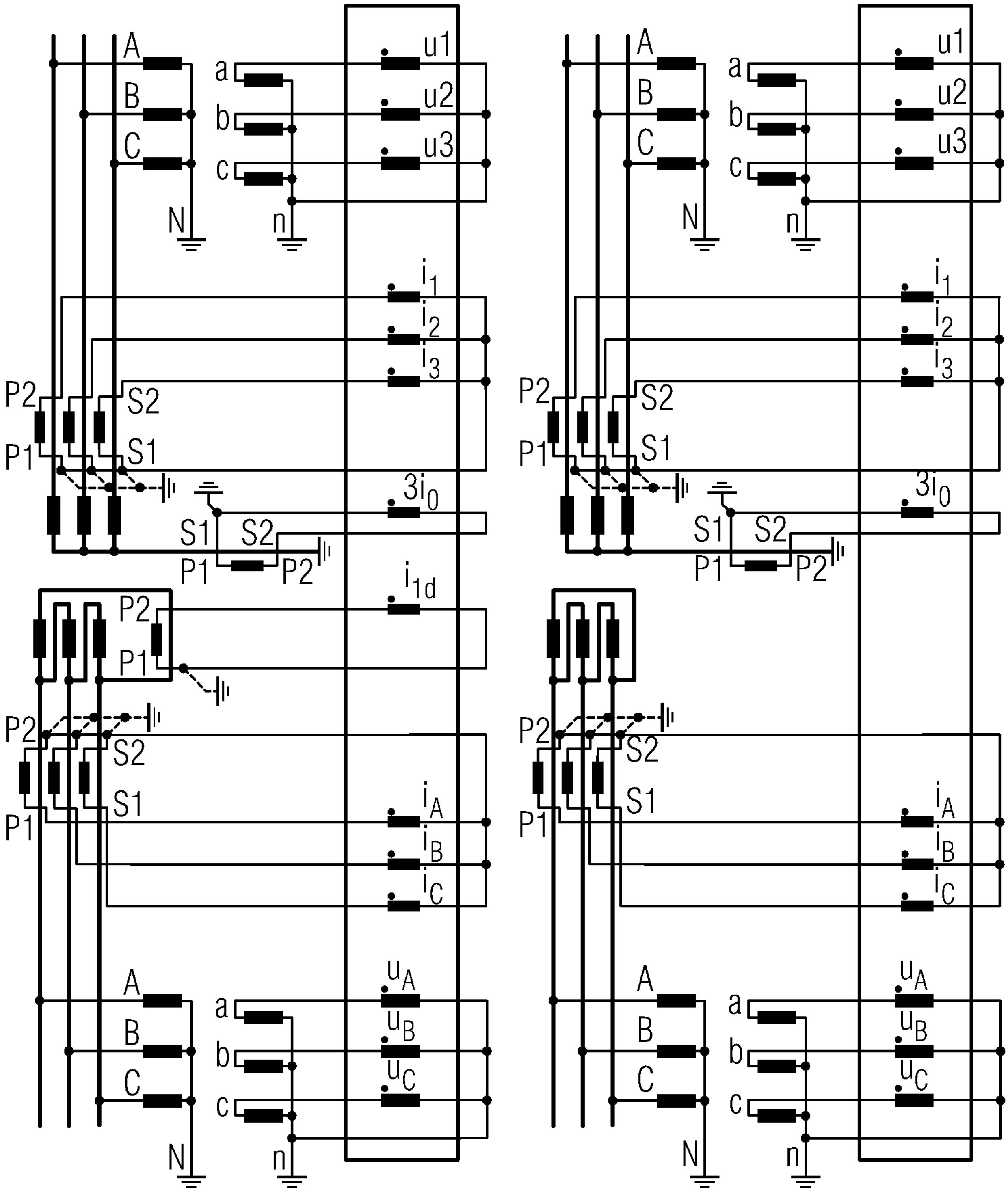
A
B
C
N
a
b
c
n
u1
u2
u3
i1
i2
i3
P2
P1
S2
S1
3i0
S1
S2
P1
P2
i1d
P2
P1
P2
S2
S1
P1
iA
iB
iC
uA
uB
uC

FIG 2

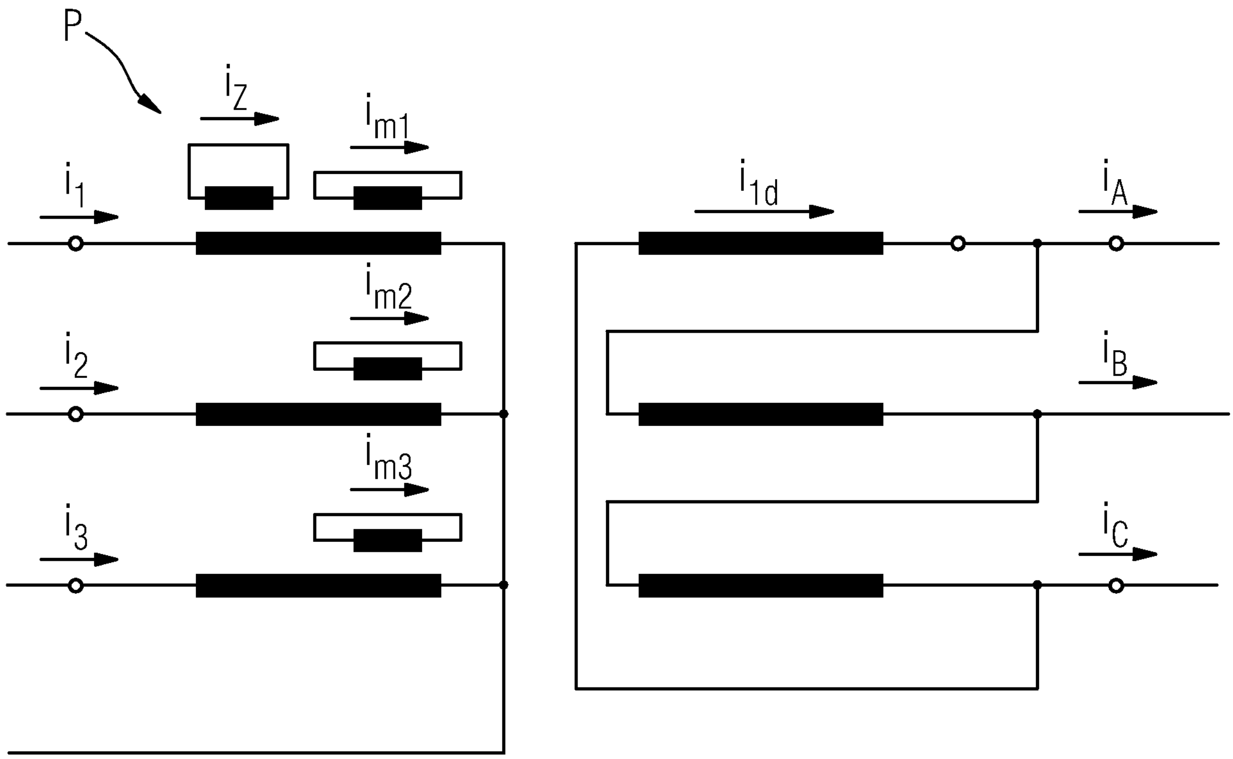

FIG 3

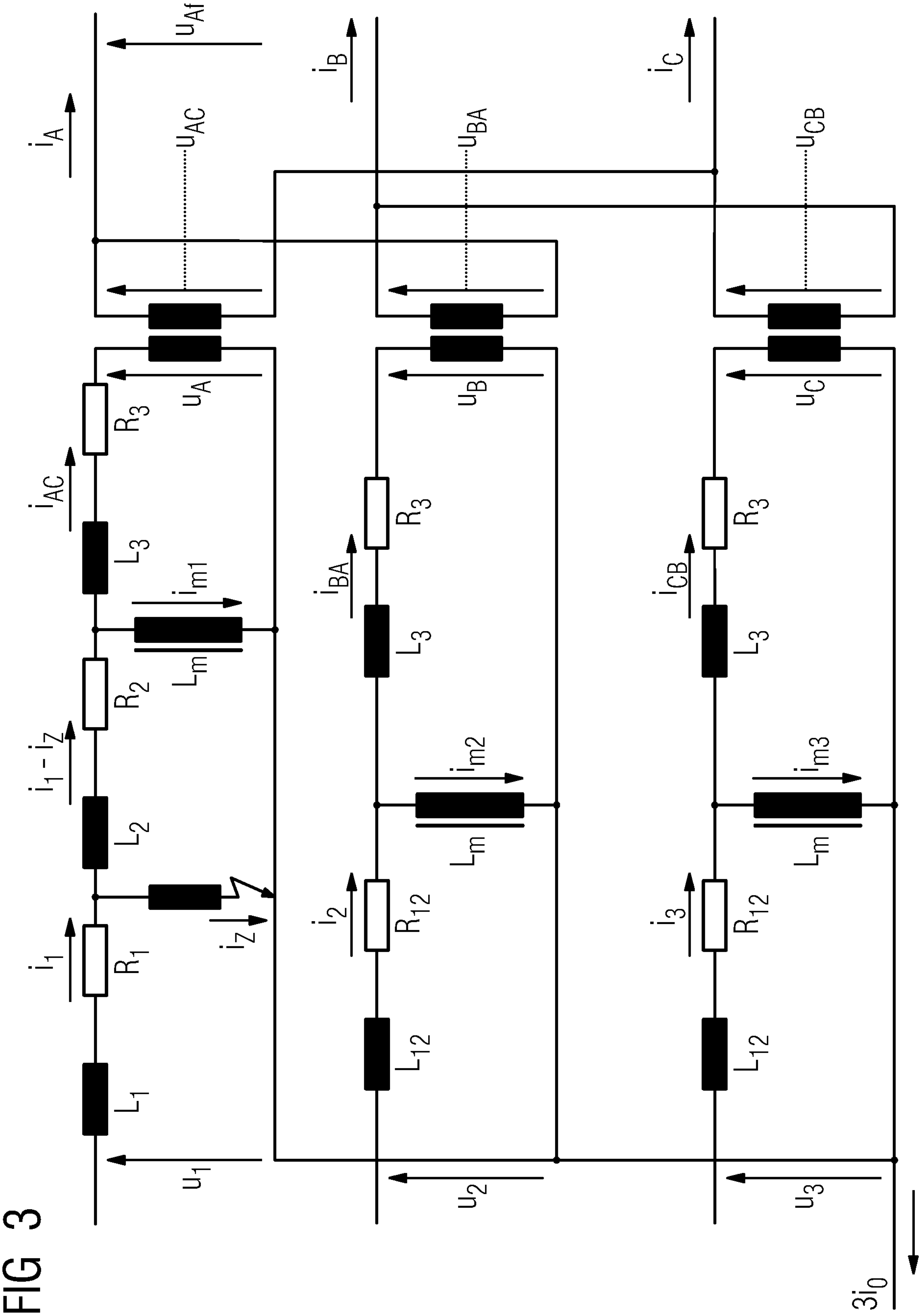

iA
uAf
iB
iC
uAC
uBA
uCB
uA
uB
uC
R3
iAC
L3
im1
Lm
R2
i1 - iZ
L2
i1
R1
iZ
L1
u1
iBA
im2
i2
R12
L12
u2
iCB
im3
i3
u3
3i0

FIG 4

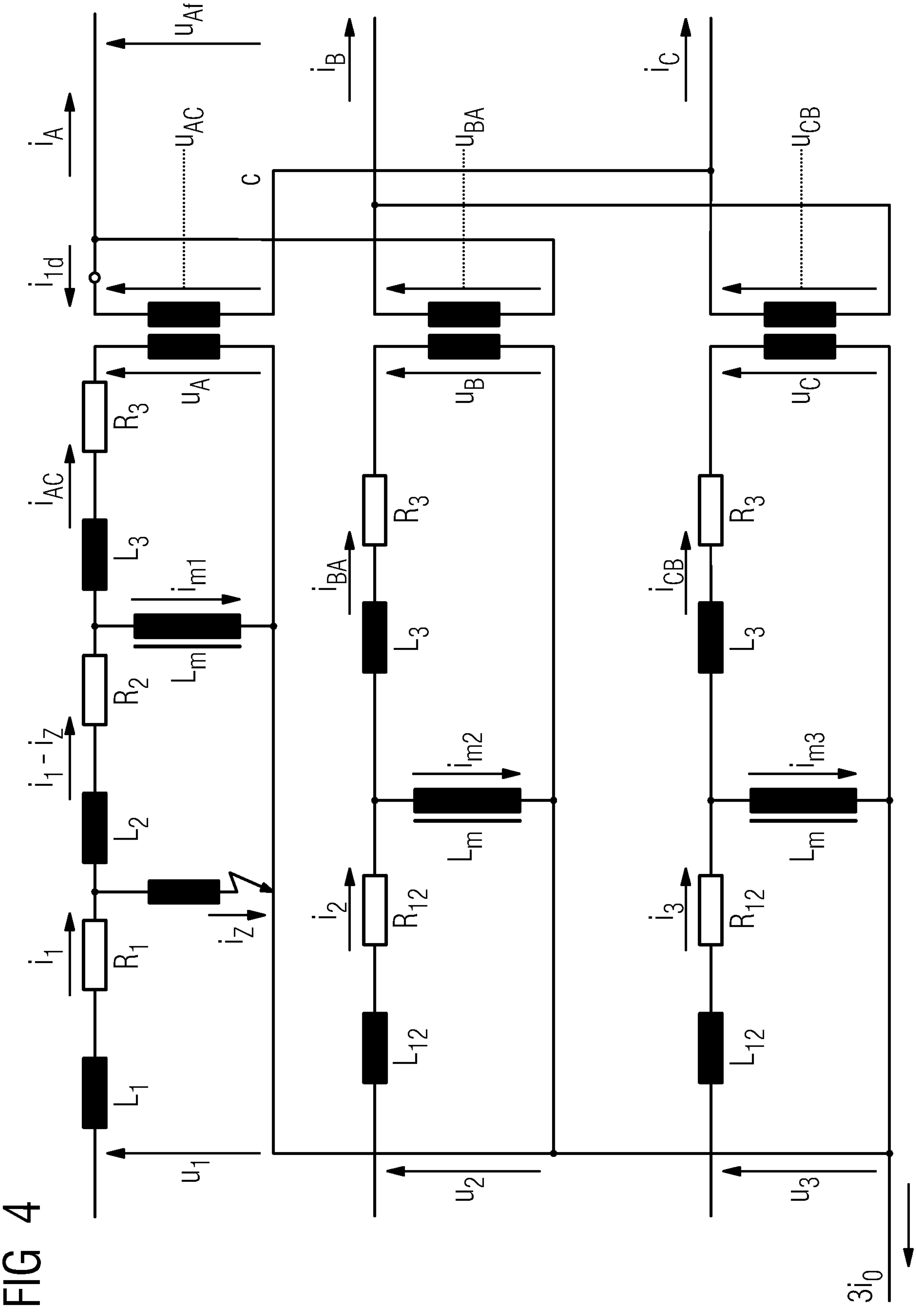

$u_{Af}$
$i_A$
$i_B$
$i_C$
$u_{AC}$
$u_{BA}$
$u_{CB}$
c
$i_{1d}$
$u_A$
$u_B$
$u_C$
$R_3$
$i_{AC}$
$L_3$
$i_{m1}$
$L_m$
$R_2$
$i_1 - i_Z$
$L_2$
$i_Z$
$i_1$
$R_1$
$L_1$
$u_1$
$i_{BA}$
$i_{m2}$
$i_2$
$R_{12}$
$L_{12}$
$u_2$
$i_{CB}$
$i_{m3}$
$i_3$
$u_3$
$3i_0$

FIG 5

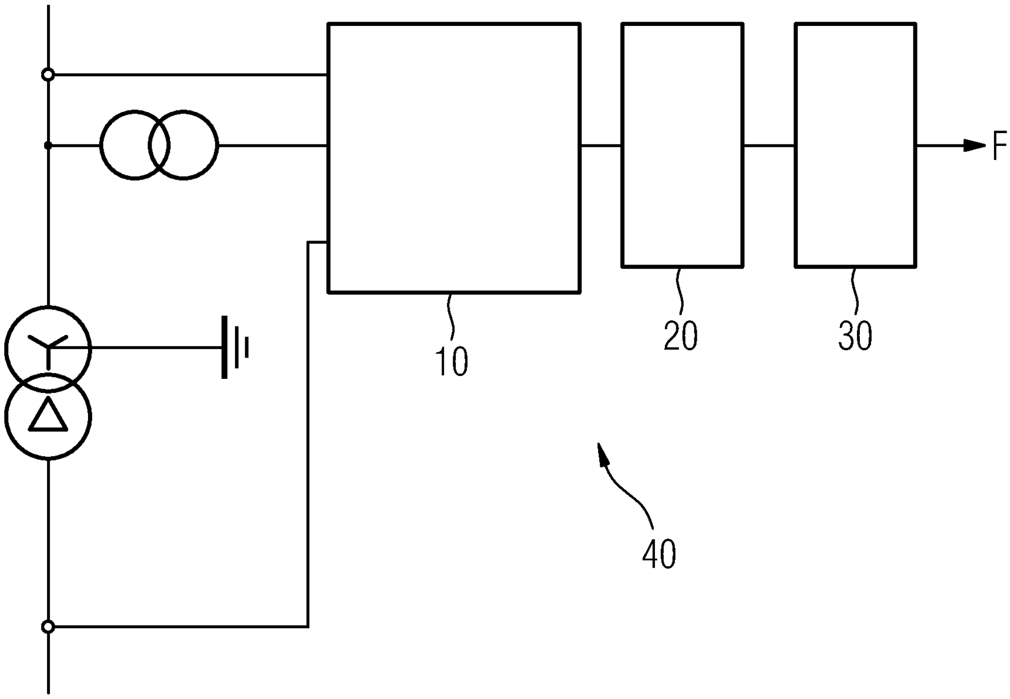


FIG 6

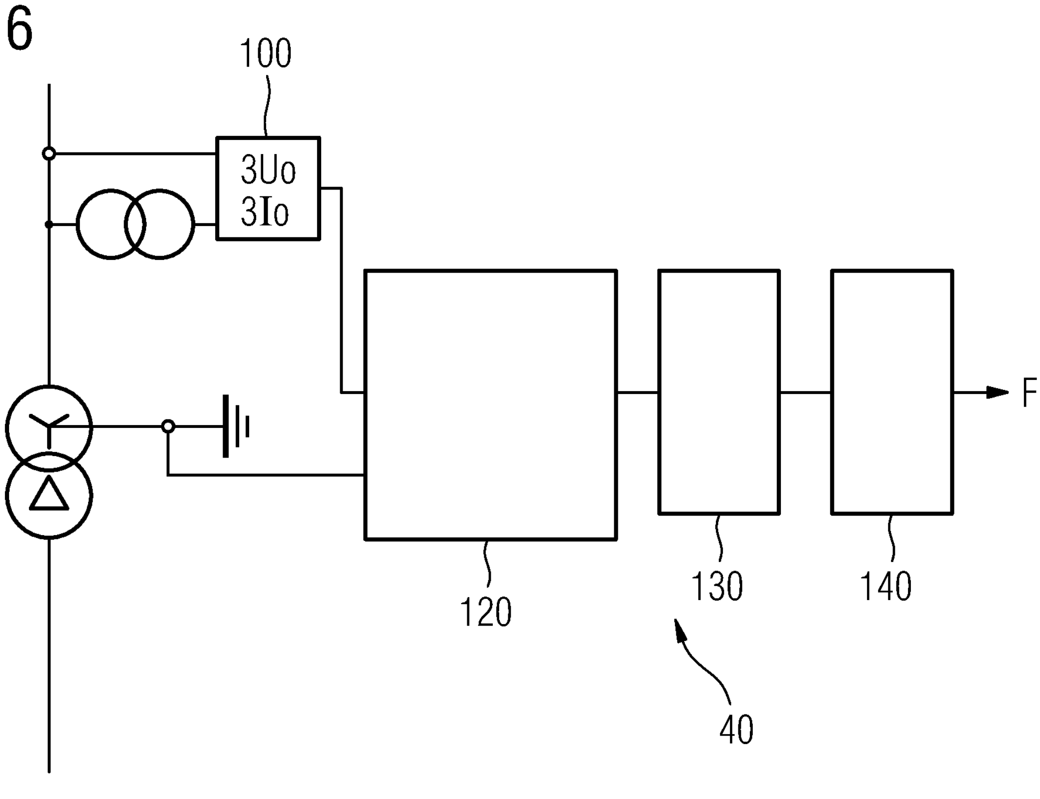

FIG 7

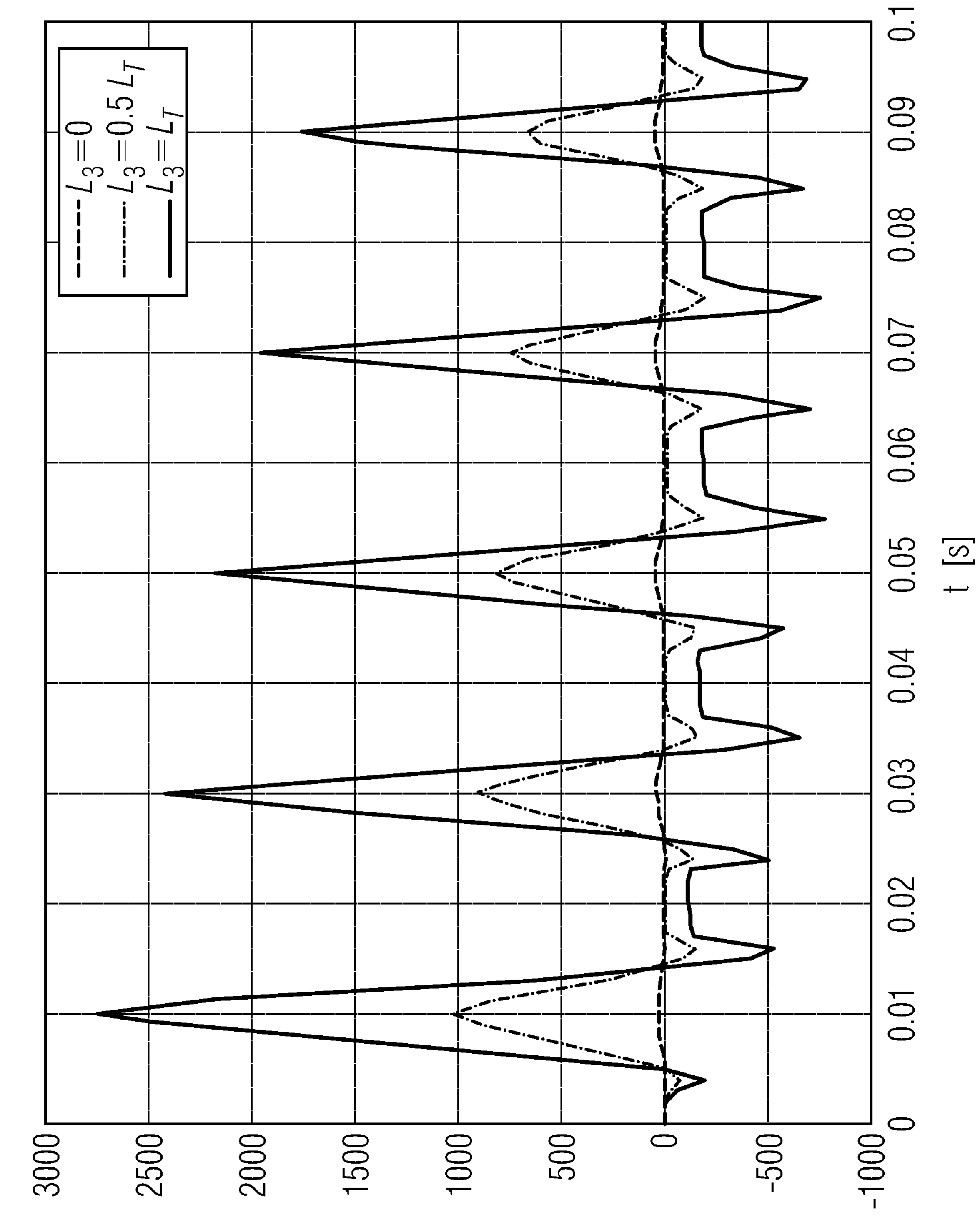
3 io [A]
3000
2500
2000
1500
1000
500
0
-500
-1000
0
0.01
0.02
0.03
0.04
0.05
0.06
0.07
0.08
0.09
0.1
t [s]
$L_3=0$
$L_3=0.5\,L_T$
$L_3=L_T$

FIG 8

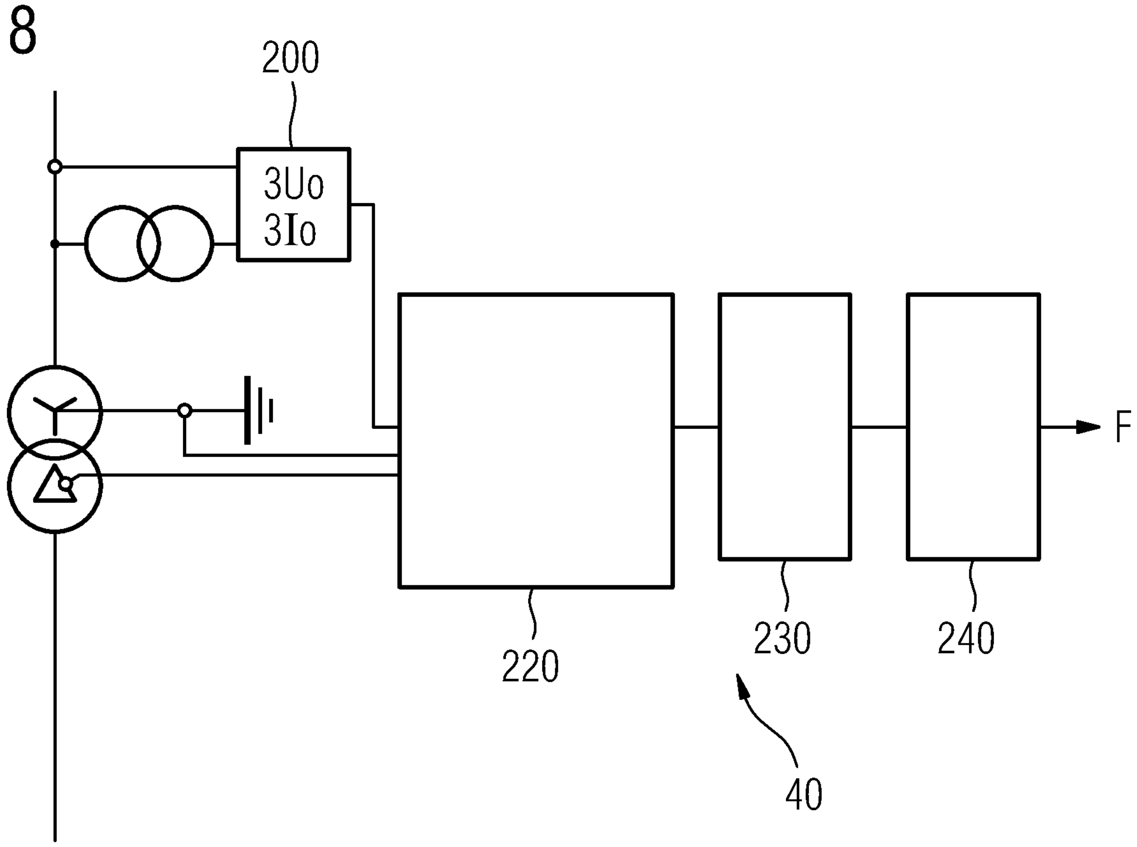

FIG 9

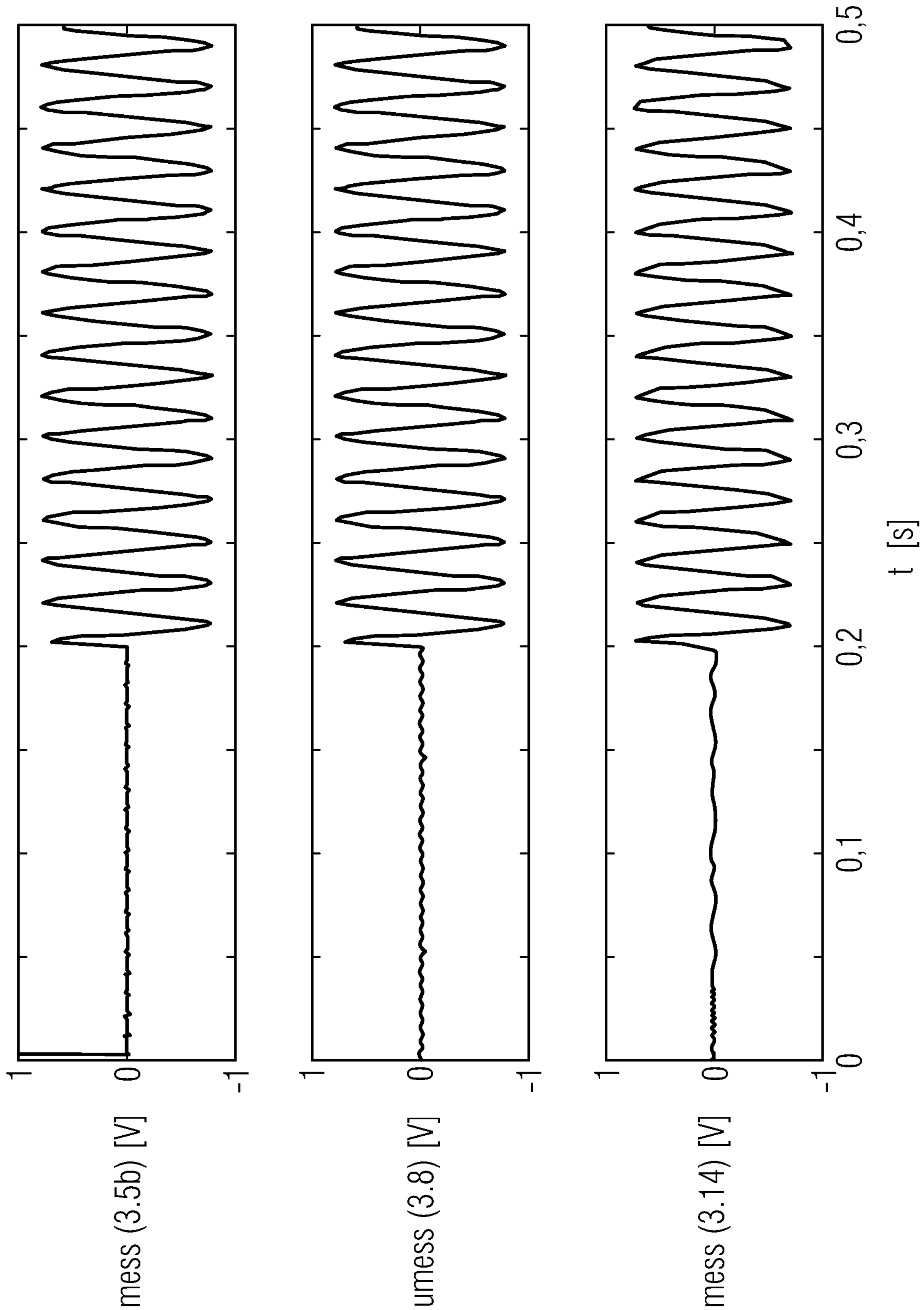

FIG 10

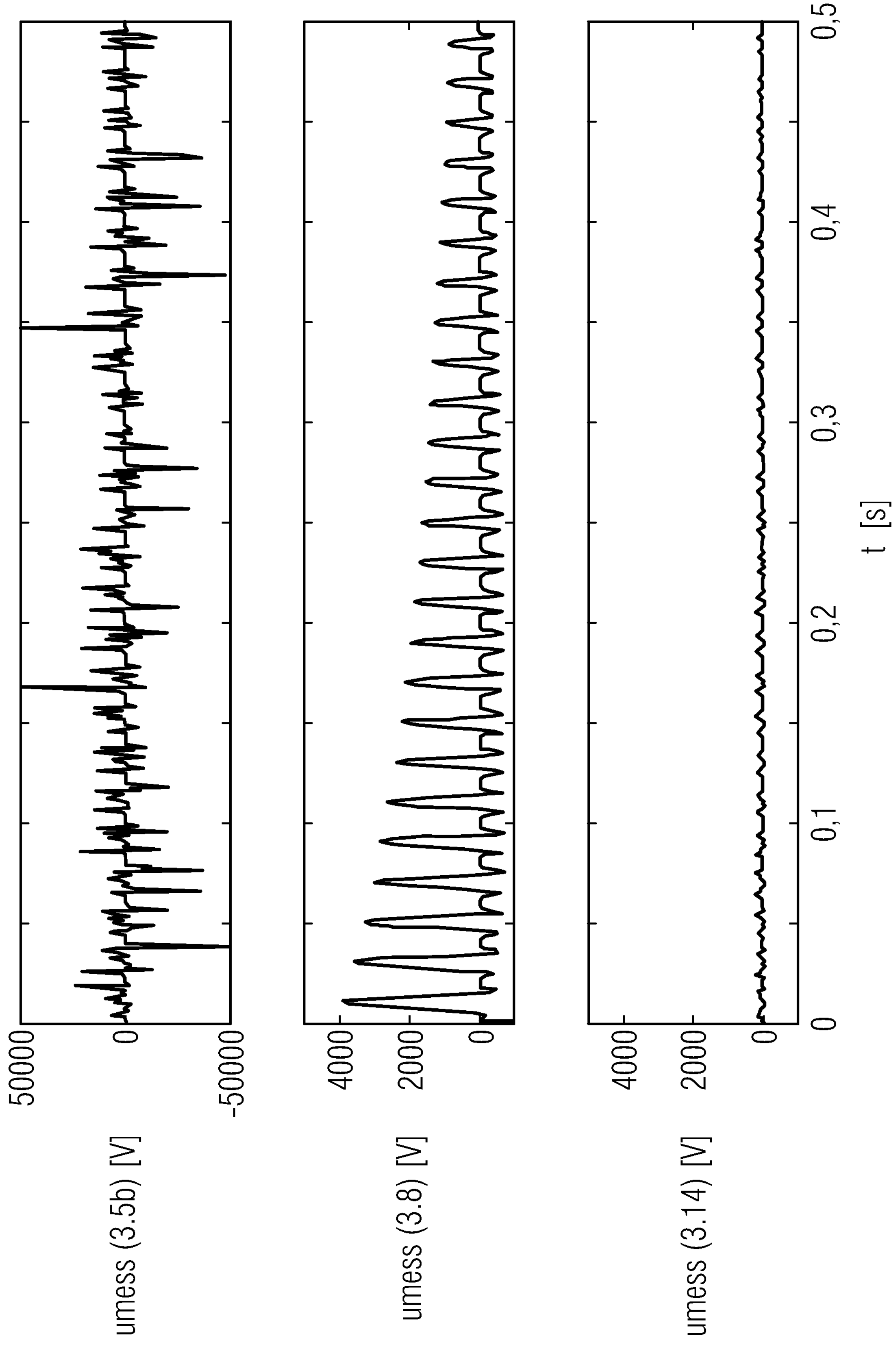
umess (3.5b) [V]
50000
0
-50000
umess (3.8) [V]
4000
2000
0
umess (3.14) [V]
4000
2000
0
0
0,1
0,2
0,3
0,4
0,5
t [s]

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20030036821 A1
- WO 2005064759 A1